(19) Europäisches Patentamt
European Patent Office
Office européen des brevets

(11) Publication number: **0 127 874**
**A2**

(12) # EUROPEAN PATENT APPLICATION

(21) Application number: 84106136.9

(22) Date of filing: 29.05.84

(51) Int. Cl.$^3$: C 07 C 85/06
C 07 C 85/08, B 01 J 23/80

(30) Priority: 01.06.83 US 500037
28.11.83 US 555579

(43) Date of publication of application:
12.12.84 Bulletin 84/50

(84) Designated Contracting States:
BE DE FR GB NL

(71) Applicant: LEHIGH UNIVERSITY
203 East Parker Avenue
Bethlehem, PA 18015(US)

(72) Inventor: Klier, Kamil
3474 Lord Byron Drive
Bethlehem PA 18017(US)

(72) Inventor: Herman, Richard G.
409 Fifth Street
Whitehall PA 18052(US)

(72) Inventor: Vedage, Gamini A.
532 Carlton Avenue
Bethlehem PA 18015(US)

(74) Representative: Berg, Wilhelm, Dr. et al,
Patentanwälte Dr. Berg Dipl.-Ing. Stapf Dipl.-Ing.
Schwabe Dr. Dr. Sandmair Postfach 86 02 45
Stuntzstrasse 16
D-8000 München 86(DE)

(54) **Catalyst and method for production of alkylamines.**

(57) This invention relates to an improved catalyst and method for the selective production of alkylamines. More particularly, it is concerned with the preparation of stable highly active catalysts for producing alkylamines by a catalytic reaction of ammonia or substituted amines and binary synthesis gas ($CO + H_2$).

EP 0 127 874 A2

LUN-23

# CATALYST AND METHOD FOR PRODUCTION OF ALKYLAMINES

## Introduction

This invention relates to an improved catalyst and method for the selective production of alkylamines. More particularly, it is concerned with the preparation of stable highly active catalysts for producing alkylamines by a catalytic reaction of ammonia, primary amines, or substituted amines and binary synthesis gas ($CO + H_2$), or alcohols.

## Background of the Invention

The preparation of methylamines of general formula $(CH_3)_n NH_{3-n}$ and $(CH_3)_n NH_{2-n}R$ occurs

by the reactions depicted in equations (1) and (2). An example of such process is the preparation of monomethylamine from ammonia and synthesis gas as shown in equation (3).

$$NH_3 + nCO + 2nH_2 \longrightarrow (CH_3)_nNH_{3-n} + nH_2O \quad (1)$$
$$NH_2R + nCO + 2nH_2 \longrightarrow (CH_3)_nNH_{2-n}R + nH_2O \quad (2)$$
$$NH_3 + CO + 2H_2 \longrightarrow CH_3NH_2 + H_2O \quad (3)$$

A primary alkylamine may be reacted with an alcohol of up to 12 carbon atoms to yield secondary and tertiary alkylamines according to equation (4).

$$RNH_2 + R'OH \longrightarrow R_1N(R_2)_2$$

where R is a lower alkyl group, R' is an alkyl group of less than 12 carbons, $R_1$ is a lower alkyl or aryl group, $R_2$ is Hydrogen or another lower alkl or aryl group with at least one of $R_2$'s being an alkyl or aryl group.

Methylamines are presently produced by a continuous process with methanol and ammonia using an amorphous silica-alumina catalyst. Even at low methanol conversion efficiencies, such processes are unselective and generally tend to the production of excess trimethylamine over the mono and dimethylamines. Production of maximum amounts of the monomethylamine is

achieved when equilibrium is reached at high methanol conversion. However, the relative amounts of the three amine species at equilibrium depend on the methanol to ammonia ratio in the reactant feed stream. At ratios of approximately 1:1 the product contains about 55% ammonia, 12% monomethylamine, 12% dimethylamine, and 22% trimethylamine, on a molar basis (Weigert, U. S. Patent 4,254,061).

Other minerals have been utilized as catalysts for the formation of methylamines by the processes of equation (3). These alternative catalysts however, generally exhibit very poor activity and thus require the use of elevated temperatures resulting in undesirable selectivities. For example, the sodium mordenite of U. S. Patent 4,254,061 describes a reaction of ammonia with methanol at 400°C, 300 psig, and a 1.1 second contact time at 1 atm. These conditions yield a 24% alcohol conversion and a formation of $8.7 \times 10^{-6}$ mol monomethylamine per kilogram of catalyst per hour with a selectivity of monomethylamine/ dimethylamine/-trimethylamine = 86.7/9.3/4.0 mol%.

Various synthetic oxide catalysts containing transition metal ions have been utilized as catalysts for the formation of methylamines from synthesis gas and ammonia. U. S. Patent 3,444,203 describes the reaction of $NH_3/CO/H_2$ = 1.3/1/2 over a $ZnO/CuO/Cr_2O_3$/-

Ferrochrome/Binder catalyst at 362°C, 975 psig, and a 2.3 second contact time at one atmosphere which yields a 24% CO conversion (47% to amines and 51% to $CO_2$) to produce 0.72 mol monomethylamine per liter of catalyst per hour. The amine selectivity in this process was monomethylamine/dimethylamine/trimethylamine = 64/22/14 mol%, and small amounts of methanol and methane were formed as side-products. Increasing the ammonia to carbon monoxide ratio to 2.6, while maintaining the hydrogen to carbon monoxide ratio at 2:1 gave rise to the formation of 0.52 mol monomethylamine per liter of catalyst per hour with 100% selectivity. Over Zn/Ba/Fe/Al catalysts and Cu/Ba/Fe/Al catalysts, it has been shown that decreasing the ammonia to carbon monoxide ratio leads to the formation of N-alkyl-amines with mainly $C_4$ - $C_9$ alkyl groups on the amines but not methyl groups (U. S. Patent 3,726,926).

A palladium-based catalyst has been reported for phenol condensation with ammonia, but it is indicated to have limited activity and selectivity. Moreover, the alkylation of ammonia occurred only in the presence of hydrogen (Ono, Y, and Ishida, H., Journal of Catalysis, (1981), Volume 72, p. 121.

## Objectives

The primary objective of this invention is to provide a process and catalyst for the preparation of methylamines from ammonia or substituted amines and binary synthesis gas mixtures.

A further object of this invention is to provide a process and catalyst for the preparation of methylamines from ammonia or substituted amines and binary synthesis gas, which provides yields comparable to those known in the prior art at lower temperatures and pressures.

Yet another object is to provide a process and catalyst for the preparation of methylamines in which excess amounts of ammonia are not necessary to obtain very high selectivities for the monomethylated product.

Still another object of this invention is to provide a process and catalyst for the preparation of methylamines by which trimethylamine can be selectively prepared from ammonia and synthesis gas with no traces of higher N-alkylamines being formed.

A still further objective of this invention is to provide a process for preparing higher substituted alkylamines from primary amines and alcohols with

higher selectivity or yield of specific products and/or at lower temperatures and pressures than those found in prior art alkylation processes.

## Summary of the Invention

The present invention concerns a catalyst and a catalytic process for preparation of methylamines and secondary and tertiary alkylamines at moderate conditions. The catalytic production process can be carried out continuously.

This process selectively forms methylamines from feed gas mixtures providing a nitrogen to carbon ratio of 0.1 to 10 over copper/zinc oxide based catalysts. The preparation method of this invention provides yields of monomethylated amines comparable to the prior art under reaction conditions involving appreciably lower temperatures and pressures than observed in the prior art. The method of the present invention also provides very high selectivities to the monomethylated product without requiring excess amounts of ammonia in the feedstream. Further, trimethylamine can be selectively prepared without the production of the higher end alkylamines as in the prior art. In addition, no methane is produced as a side product as is commonly observed with known catalysts.

A primary alkylamine and an alcohol of up to 12 carbon atoms are reacted at low temperature (50-250°C) over specific catalysts (alkali-treated catalysts generally or binary Cu/ZnO and $Pd/SiO_2$ systems, with or without alkali treatment) to produce, with relatively good selectivity, secondary and tertiary alkylamines of the general formula, $R_1N(R_2)_2$, wherein $R_1$ is a lower alkyl or an aryl group, and $R_2$ is hydrogen or another lower alkyl or aryl group, with at least one of $R_2$'s being an alkyl or aryl group.

## Detailed Description of the Invention

The novel catalysts of this invention that are useful for the methylamaine synthesis process

$$NH_3 + nCO + 2nH_2 \rightarrow (CH_3)_nNH_{3-n} + nH_2O \qquad (1)$$

$$NH_2R + nCO + 2nH_2 \rightarrow (CH_3)_nNH_{2-n}R + NH_2O \qquad (2)$$

may involve any composition of Cu/ZnO, but the preferred compositions are in the wt% range of CuO/ZnO = 30/70 to 67/33, with the 30/70 wt% composition being the most preferred. These calcined catalysts are then reduced and pelletized. They may also be doped with potassium hydroxide, rubidium hydroxide, or cesium hydroxide under an inert atmosphere so that the alkaline metal ion content is in the range of 0.01 to 1.0 mol%

with respect to copper and zinc. Exemplary of the ammonia or amine methylation process is the catalytic preparation of monomethylamine under mild reaction conditions from virtually stoichiometric reactant ratios of ammonia and carbon monoxide. Further, with the novel binary catalyst system, the water gas shift co-reaction of by-product water and carbon monoxide is induced so that hydrogen and carbon dioxide, which are more easily separated from the desired methylamine product, are produced wholly or in part as the final hydrogen and oxygen-containing by-products. If it is desired to decrease the conversion of carbon monoxide to carbon dioxide, the $H_2/CO$ ratio in the reactant gas stream can be increased above the typical 2/1 and the unreacted hydrogen, as well as the unconverted reactant ammonia or amine and carbon dioxide, can be recycled.

One important aspect of this invention is the discovery that a key to better selectivity of the alkylation (minimizing disproportionation and scrambling of alkyl groups when making the secondary amines) is avoidance of residual acidity of the catalyst. This is accomplished by the introduction of a minor amount of alkali metal ion into the catalyst either during the catalyst synthesis or by their deposition upon the prepared catalyst. Localized acid sites are thus precluded, and this is applicable to conventional $Al_2O_3$ substrate catalysts, as well as the binary and Group VII catalysts which are a separate part of the present invention.

Spectroscopic study of the binary Cu/ZnO catalyst prepared as taught herein indicates that this catalyst is a complex metal-oxide compound, in which the reduced copper (either in metallic or copper ionic form) is so finely divided as to appear amorphous under X-ray analysis. The finely divided copper particles may be dispersed, at least in part, within the crystalline structure of the zinc oxide. The alkali metal in the alkalized catalysts of this invention may be similarly dispersed or adsorbed on the surface of the finished catalyst, depending upon the manner of the introduction of the alkali ion into the system.

Among known catalyst disclosed herein, the highest selectivity for making secondary amines from alcohol and lower amines is displayed by Cu/ZnO catalysts that do not require $Cr_2O_3$, $Al_2O_3$, or $AnAl_2O_4$ as a tertiary component.

The catalytic methylation processes of this invention can be carried out in the temperature range of 150 - 300°C, the pressure range of 14.7 to 1500 psig, and the gas hourly space velocity (GHSV) range of 500-20,000 liters of feed gas per liter of catalyst per hour measured at STP with a tertiary $NH_3/CO/H_2$ or substituted amine/$CO/H_2$ reactant feed gas. According to the present invention, the nitrogen/CO ratio in the reactants expressed on a molar basis can usefully range

from 0.1:1 to about 10:1, but a range of 0.1:1 up to 2:1 is preferred. The $H_2/CO$ ratio can usefully vary from 2:1 to 10:1, but a ratio of 2:1 is typically preferred.

Further, according to the present invention, the primary (or secondary) amine reactant to alcohol ration, expressed on a molar basis, can usefully range from about 0.5:1 to about 20:1, but a range of 0.8:1 to about 3:1 is preferred.

The Examples 1-9 that follow establish the following features:

(i) Alkylation of a primary amine by a primary alcohol occurs at fast rates and mild conditions, very selectively over the Cu/ZnO catalyst (Examples 1 and 7); also, with the Cu/ZnO/K, Cu/ZnO/Rb, and Cu/ZnO/Cs catalysts (Examples 10 and 11) but with poorer selectivity and concomitant disproportionation of the amine over the $Pd/SiO_2$ catalyst (Example 3);

(ii) Alkylation of a primary amine by a secondary alcohol occurs rapidly and at mild conditions, selectively over the Cu/ZnO catalyst (Example 2), and at a slower rate non-selectively with concomitant disproportionation of the amine over the $Pd/SiO_2$ catalyst (Example 4).

(iii) Disproportionation of the primary amine to the secondary amine and ammonia occurs, in the absence of alcohols. This side reaction occurs more quickly with the $Pd/SiO_2$ catalysts than with the Cu/ZnO catalysts (Example 5).

(iv) Disproportionation of the primary amine over the $Pd/SiO_2$ catalyst can be suppressed, relative to alkylation of the amine by alcohol, by lowering the temperature (Example 6).

(v) Hydrogen is not a necessary component of the reactants stream, nor does it retard the alkylation reaction over the Cu/ZnO catalysts (Examples 7 and 9).

(vi) Selectivity of the binary Cu/ZnO catalysts can be further increased by the addition of alkali metals to the catalysts (Examples 1, 10, and 11).

(vii) The overall activity of the presently disclosed $Pd/SiO_2$ catalyst (for the alkylation of isopropylamine with alcohols at 190°C and 75 atm), is comparable with that of the amination of phenol over a $Pd/Al_2O_3$ catalyst at 200°C and 1 atm, but the selectivity of the former is much greater than the latter (Examples 3 and 4).

The catalysts useful for the process of this invention may involve any composition of Cu/ZnO, but the most preferred compositions are in the weight % range of Cu/ZnO = 30/70 to 67/33 wt%, the latter ratio being desirable where low surface area ( 13 $m^2/g$) catalysts are needed.

In general, any Cu/ZnO/$M_xO_y$ where M is any metal ion generally appearing in oxide supports and x and y are dictated by the valence state of M may be improved, i.e., rendered more attrition-resistant for the alkylation reaction of this invention, by the incorporation in these catalysts of, or impregnation of the catalyst with, alkali metals, such as potassium, rubidium, and cesium.

However, the third component $M_xO_y$ is one that may lower (compared to the binary catalysts of this invention) the activity and/or the selectivity of amine alkylation by alcohols where a single hydrogen atom of the amine is replaced by the alkyl radical.

Furthermore, alkali-treated supported catalysts such as Pd/$M_xO_y$, Pt/$M_xO_y$, and Ir/$M_xO_y$ are also suitable. Also suitable are metallic alloys such as Cu-ZnO, Pd-Au, Pd-Cu, Pd-Ir, Pd-Ag and other combinations of these metals, which might or might not be supported on $M_xO_y$ materials.

In general, catalysts that promote the formation of alcohols from synthesis gas, or which dehydrogenate alcohols to aldehydes or ketones cleanly, are suitable for the process of this invention but at conditions at which alcohols are not typically produced, i.e., at the lower temperatures and pressures taught here.

Examples 10-13 illustrate the production of methylamines according to the present invention.

Example 1

A Cu/ZnO catalyst, of composition CuO/ZnO = 30/70 weight %, was prepared by dissolving the metal nitrate salts in water heated to 80°C, coprecipitation of the metal hydroxycarbonates by the drop-wise addition of 1.0 M $Na_2CO_3$ to the solution until the pH increased to 6.8, filtration, washing, and air-drying of the light blue solid, and calcination using a step-wise procedure to achieve a final temperature of 350°C. The dark material was pelletized from an aqueous slurry, sieved to 10-20 Mesh, and 2.45 g (2.9 ml) diluted with 7 ml of Pyrex beads was centered in the reactor. Reduction was carried out at 250°C with a flowing 2% $H_2$/98% $N_2$ gas mixture until water was absent from the exit gas.

At ambient temperature, the reactor was pressurized to 75 atm with a $H_2/CO/CO_2$ = 70/24/6 vol % synthesis gas and the flow rate (GHSV) was adjusted to 5200 liters feed gas/liters catalyst/hour (l/l/hr). The reactor was heated to 225°C to demonstrate that the catalyst was a typical methanol synthesis catalyst. There was 17.9% carbon monoxide conversion to methanol with a yield of 10.4 mol/l of catalyst/hr was observed.

The temperature was lowered to 190°C (carbon conversion to methanol = 2.0%, 1.1 mol methanol/l/hr). The synthesis gas was replaced by nitrogen flowing at the same gas hourly space velocity (0.612 mol $N_2$/hr). Under these experimental conditions, a 1:1 mole ratio mixture of ethanol and isopropylamine was pumped into the gas stream at the top of the reactor at the rate of 20 l of liquid mixture per min. The product composition, exclusive of nitrogen, is presented in Table I. It is evident that approximately 35% of the isopropylamine was alkylated to ethylisopropylamine, with this reaction proceeding at the rate of 1.0 mol/l of catalyst/hr. The selectivity, defined as 100x (mol fraction of ethylisopropylamine)/(mol fractions of ammonia plus diethylamine plus ethylisopropylamine), was calculated as 88%, while no diethylisopropylamine was formed. (Table I)

Table I

The Results of the Reaction of Isopropylamine with Ethanol and a Pressure of 75 atm over Cu/ZnO Catalyst

| | | Ethanol | Isoproply-amine[b] | Ammonia | Water | Isopropanol | Diethyl-amine | Ethylisopropyl-amine |
|---|---|---|---|---|---|---|---|---|
| mol/hr | In | 0.0084 | 0.0084 | | | | | |
| mol/hr | Out | 0.0057 | 0.0049 | 0.0003 | 0.0022 | 0.0006 | 0.0001 | 0.0029[a] |

[a] ± 0.0001 mol/hr

[b] total conversion to products = 41.7%, conversion to ethylisopropylamine = 34.5%

Example 2

A 2.45 g (3.2 ml) portion of the CuO/ZnO (30:70) catalyst, prepared as described in Example 1, was placed in the reactor and reduced in the same manner. The reactor was pressurized to 75 atm with $H_2/CO/CO_2$ = 70/24/6 vol % synthesis gas, GHSV was set at 4700 l/l/hr, and the catalyst was tested at 250°C. A carbon conversion to methanol of 56% was observed, which is the expected catalytic activity.

The temperature was lowered to 190°C, and the synthesis gas was replaced by nitrogen at GHSV = 4700 l/l/hr. An isopropylamine/isopropanol mixture with a 1.00:1.34 mole ratio was pumped into the gas stream at the rate of 20 l of liquid mixture per min. About 70% of the isopropylamine was alkylated to diisopropylamine (1.35 mol/l/hr) and no evidence of disproportionation was observed, as indicated in Table II.

Isopropylamine by itself was pumped into the gas stream at 10 l/min, and about 22% conversion to products by disproportionation was obtained. By decreasing the temperature to 159°C, the degree of disproportionation decreased to about 3% (Table II). Injecting a 1.00:1.26 mole ratio isopropylamine/-isopropanol mixture at this temperature, at the rate of 20 l/min, resulted in approximately 55% of the amine being converted to diisopropylamine by alkylation (1.16

mol/1 of catalyst/hr). The amine conversion experiments were conducted during five days of continuous operation, and when removed from the reactor under nitrogen, the used catalyst was observed as pitch black. This color is an indication of the presence of highly interdispersed, electronically interacting catalyst components that produce the active state of the catalyst. The selectivity to diisopropylamine is 100%, both at 190°C and at 159°C. (Table II)

Table II

The Results of the Alkylation of Isopropylamine With Isopropanol (and of the Disproportionation of Isopropylamine at a Pressure of 75 atm over Cu/ZnO Catalyst

| Temperature (°C) | | Isopropanol | Isopropylamine | Ammonia | Water | Diisopropylamine |
|---|---|---|---|---|---|---|
| 190°C | mol/hr In | 0.0086 | 0.0064 | | | |
| | mol/hr Out | 0.0046 | 0.0019[b] | 0.0000 | 0.0042 | 0.0043[a] |
| 190°C | mol/hr In | | 0.0071 | | | |
| | mol/hr Out | | 0.0055 | 0.00073 | | 0.00086[a] |
| 159°C | mol/hr In | 0.0083 | 0.0066 | | | |
| | mol/hr Out | 0.0048 | 0.0030[c] | 0.0000 | 0.0035 | 0.0037[a] |
| 159°C | mol/hr In | | 0.0071 | | | |
| | mol/hr Out | | 0.0069 | 0.0001 | | 0.0001 |

[a] ± 0.0001 mol/hr

[b] total conversion = 70.3%

[c] total conversion = 54.5%

Example 3

A 4.8 wt% Pd on $SiO_2$ catalyst was prepared by adding 200 g of 10-20 Mesh silica gel to 200 ml of concentrated hydrochloric acid containing 16.7 g of $PdCl_2$. The liquid was evaporated at 60°C with the aid of evacuation, and the sample was dried under vacuum at 150°C for 3 hr and then calcined in air at 400°C for 4 hr. A portion of the catalyst was reduced in flowing hydrogen at 300°C for 2 hr and at 500°C for 2.5 hr. After cooling to room temperature, the reactor was pressurized to 75 atm with a $H_2/CO$ = 70/30 vol% synthesis gas. After calibrating the gas hourly space velocity to 1500 l/l/hr, the catalyst was heated to 250°C and the methanol synthesis activity was determined for 53 hr, which was observed to be 3.0% conversion to methanol (0.55 mol/l/hr).

After decreasing the temperature to 190°C, the synthesis gas was replaced by nitrogen at the same GHSV, and these conditions were maintained for 44 hr. Injection into the nitrogen gas stream flowing at GHSV = 1500 $hr^{-1}$ of a 1.45:1.00 mole ratio of an ethanol/-isopropylamine mixture was carried out at the rate of 20 l of liquid mixture per min. Approximately 73% of the isopropylamine was converted to products. Table III indicates that about equal quantities of ethylisopropylamine and diisopropylamine are formed, the

yield of each being approximately 0.15 mol/l/hr. Lowering the temperature to 128°C decreased the conversion to 0.2%, which occurred only by direct alkylation of the amine with ethanol with the product being ethylisopropylamine. The selectivity to ethylisopropylamine was 34.0%. (Table III)

## Table III

The Results (mol%) of the Reaction of Isopropylamine with Ethanol at a Pressure of 75 atm over $Pd/SiO_2$ Catalyst

| | Ethanol | Isopropylamine[b] | Ammonia | Water | Isopropanol | Diethylamine | Ethylioso-propylamine | Diisopropylamine |
|---|---|---|---|---|---|---|---|---|
| In | 0.0103 | 0.0071 | | | | | | |
| Out | 0.0086 | 0.0019 | 0.0012 | 0.0017 | 0.00080 | 0.00021 | 0.0015 | 0.0015 |

[a] ± 0.0001 mol/hr, except ± 0.0002 for water and diisopropylamine

[b] total conversion to products = 73.2%, conversion to ethylisopropylamine = 21.1%

## Example 4

A similar portion of the $Pd/SiO_2$ catalyst was treated as in Example 3 and equilibrated at 190°C in flowing nitrogen. A 1.65:1.00 mole ratio isopropanol/-isopropylamine mixture was pumped into the nitrogen gas stream flowing at GHSV = 1500 $hr^{-1}$ at the rate of 20 1 of liquid mixture per minute. About 35% of the isopropylamine was converted to diisopropylamine at the rate of 0.2 mol/l/hr. Considering the yields of ammonia and water in Table IV, it is evident that approximately two-thirds of the amine product was formed by disproportionation and about one-third arose by alkylation of the amine with the alcohol. The selectivity to diisopropylamine was 60.6%. (Table IV)

Table IV

The Results of the Reaction of Isopropylamine With Isopropanol and a Pressure of 75 atm over $Pd/SiO_2$ Catalyst at 190°C

| | Isopropanol | Isopropylamine[b] | Ammonia | Water | Diisopropylamine |
|---|---|---|---|---|---|
| mol/hr In | 0.0094 | 0.0057 | | | |
| mol/hr Out | 0.0085 | 0.0025 | 0.0013 | 0.00068 | 0.0020[a] |

[a] $\pm$ 0.0001 mol/hr

[b] total conversion to products = 56.1%; conversion to diisopropylamine = 35.1%

Example 5

A 4.0 g (10 ml) portion of the $Pd/SiO_2$ catalyst was treated as in Example 3 and equilibrated at 190°C in flowing nitrogen for 9 days. Isopropylamine was pumped into the nitrogen gas stream (GHSV = 1500 $hr^{-1}$) at the rate of 10 l/min (0.0071 mol/hr). About 50% of the isopropylamine was converted to the two products. The composition of the exit gas, exclusive of nitrogen, was isopropylamine/diisopropylamine/ammonia = 47.2/25.0/27.8 mol%, which corresponds to a yield of diisopropylamine of 0.18 mol/l/hr. Decreasing the temperature to 159°C produced an exit gas composition, exclusive of nitrogen, of isopropylamine/-diisopropylamine/ammonia = 95.2/2.5/2.3 mol%, and a yield of the disproportionation product of 0.02 mol/l/hr. (Table V)

Example 6

A similar portion of the $Pd/SiO_2$ catalyst was treated as in Example 3 and equilibrated at 190°C in flowing nitrogen (GHSV = 1500 $hr^{-1}$) for 36 hr. After lowering the temperature to 159°C, a 1.1:1.0 mole ratio isopropanol/isopropylamine mixture was pumped into the gas stream at the rate of 20 l of liquid mixture per min. As indicated in Table V, approximately 7% of the isopropylamine was converted to diisopropylamine (at a

rate of 0.05 mol/l/hr), and most of the conversion was accomplished by alkylation rather than by disproportionation.

In comparison with Example 4, it is demonstrated that lower temperature inhibits the disproportionation of isopropylamine over this Pd-based catalyst. However, Example 2 shows that the Cu/ZnO catalyst is appreciably more active for the alkylation of isopropylamine with isopropanol. The selectivity to diisopropylamine was 76.7%. (Table V)

Table V

The Results of the Reaction of Isopropylamine With Isopropanol and a Pressure of 75 atm over $Pd/SiO_2$ Catalyst at 159°C

| | Isopropanol | Isopropylamine[b] | Ammonia | Water | Diisopropylamine |
|---|---|---|---|---|---|
| mol/hr In | 0.0079 | 0.0071 | | | |
| mol/hr Out | 0.0076 | 0.0066 | 0.00014 | 0.00033 | 0.00046[a] |

[a] ± 0.0001 mol/hr

[b] total conversion to products = 7.0%; conversion to diisopropylamine = 5.6%

Example 7

After purging, the reactor was pressurized to 26 atm with $CH_3NH_2/N_2$ = 3/97 mol%, GHSV was set at 8870 $hr^{-1}$, and the Cu/ZnO catalyst was tested at 190°C. 1-Butanol was injected into the gas stream at the rate of 25 l/min. (2:1 mole ratio). Approximately 52.4 mol% of 1-butanol was converted to 1-butyl N-methyl amine (methyl N-butylamine) with the selectivity of 95.5% to this amine, the side product being di-1-butyl N-methylamine. (Table VI)

Table VI

The Results of the Reaction of Methylamine With 1-Butanol at 26 atm

| | $CH_3NH_2$ | $H_2O$ | 1-BuOH | $BuNHCH_3$ | $Bu_2NCH_3$ |
|---|---|---|---|---|---|
| mol/hr In | 0.0326 | 0.0000 | 0.0164 | 0.0000 | 0.0000 |
| mol/hr Out | 0.0236 | 0.0094 | 0.0070 | 0.0086[a] | 0.0004 |

[a] ± 0.0002 mol/hr

Example 8

The reactor was pressurized to 24 atm with $CH_3NH_2/N_2$ = 3/97 mol%. GHSV was set at 7360 $hr^{-1}$ and the Cu/ZnO catalyst was equilibrated at 190°C. 1-Butanol was pumped at 25 l/min. (1.7:1.0 mole ratio). About 50% of 1-butanol was converted to 1-butyl N-methylamine with the selectivity of 96.5% to this amine, the side product being di-1-butyl N-methylamine. (Table VII)

Table VII

The Results of the Reaction of Methylamine With 1-Butanol at 24 atm

| | $CH_3NH_2$ | $H_2O$ | 1-BuOH | $BuNHCH_3$ | $Bu_2NCH_3$ |
|---|---|---|---|---|---|
| mol/hr In | 0.0271 | 0.0000 | 0.0164 | 0.0000 | 0.0000 |
| mol/hr Out | 0.0187 | 0.0088 | 0.0076 | 0.0082[a] | 0.0003 |

[a] ± 0.0002 mol/hr

Example 9

The reactor was pressurized to 30 atm with $H_2/CH_3NH_2/N_2$ = 21.36/2.36/76.28, mol%, GHSV was set at 9360 $hr^{-1}$ and the catalyst was tested at 190°C. 1-Butanol was pumped at 25 l/min. (1.7:1.0 mole ratio). About 56% of the 1-Butanol was converted to 1-butyl N-methylamine with the selectivity of 95.8% to this amine, the side product being di-1-butyl N-methylamine. (Table VIII)

## Table VIII

The Results of the Reaction of Methylamine With 1-Butanol at 30 atm in the Presence of Hydrogen

| | $CH_3NH_2$ | $H_2O$ | 1-BuOH | $BuNHCH_3$ | $Bu_2NCH_3$ |
|---|---|---|---|---|---|
| mol/hr In | 0.0271 | 0.0000 | 0.0164 | 0.0000 | 0.0000 |
| mol/hr Out | 0.0178 | 0.0099 | 0.0062 | 0.0092[a] | 0.0004 |

[a] ± 0.0002 mol/hr

Example 10

A more attrition-resistance catalyst containing potassium was prepared that also exhibited high selectivities in the alkylation of amines. A 3.00 g portion of the Cu/ZnO = 30/70 mol% catalyst, prepared as described in Example 1, was placed in the reactor and reduced in the same manner. The catalyst was removed from the reactor under a nitrogen atmosphere and was added to 25 ml of a nitrogen-purged, aqueous solution containing 0.009 g of KOH at 50°C. The solution was evaporated to dryness under a flowing nitrogen atmosphere. A 2.45 g (3.0 ml) portion of the dried catalyst, which contained 0.52 mol% K on the basis of metal content, was placed in the reactor. The reactor was pressurized to 75 atm with nitrogen, GHSV was set to 5000 $hr^{-1}$, and the catalyst was equilibrated at 190°C. A 1:1 mole ratio ethanol/isopropylamine mixture was injected into the gas stream at the rate of 20 1 of liquid mixture per min. About 17% of the isopropylamine was converted to ethylisopropylamine at the rate of 0.47 mol/1 catalyst/hr, as deduced from Table IX. No diethylisopropylamine was detected in the exit gas. (Table IX)

Table IX

The Results of the Reaction of Isopropylamine with Ethanol over K/Cu/ZnO Catalyst

| | Ethanol | Isopropylamine | Ammonia | Water | Isopropanol | Ethylisopropylamine |
|---|---|---|---|---|---|---|
| mol/hr In | 0.0084 | 0.0084 | | | | |
| mol/hr Out | 0.0072 | 0.0065 | 0.0003 | 0.0010 | 0.0003 | 0.0014[a] |

[a] ± 0.0001 mol/hr

Example 11

A more attrition-resistant catalyst containing rubidium was prepared that exhibited high selectivities in the alkylation of amines. A 3.00 g portion of the Cu/ZnO = 30/70 mol% catalyst, prepared as described in Example 1, was placed in the reactor and reduced in the same way. The catalyst was removed from the reactor under a nitrogen atmosphere and was added to 10 ml of a nitrogen-purged, aqueous solution containing 0.0167 g of RbOH at 50°C. The solution was evaporated to dryness under a flowing nitrogen atmosphere. A 2.45 g (3.0 ml) portion of the dry catalyst, which contained 0.54 mol% Rb on the basis of metal content, was placed in the reactor. The reactor was pressurized to 75 atm with nitrogen, GHSV was set to 5000 $hr^{-1}$, and the catalyst was equilibrated at 190°C. A 1:1 mole ratio ethanol/-isopropylamine mixture was injected into the gas stream at the rate of 20 l of liquid mixture per min. Approximately 23% of the isopropylamine was converted to ethylisopropylamine at the rate of 0.63 mol/l catalyst/hr, as demonstrated in Table X. No diethylisopropylamine was detected in the exit gas.

**Table X**

The Results of the Reaction of Isopropylamine with Ethanol over Rb/Cu/ZnO Catalyst

| | | Ethanol | Isoproply-amine | Ammonia | Water | Isopropanol | Ethyliso-propylamine |
|---|---|---|---|---|---|---|---|
| mol/hr | In | 0.0084 | 0.0084 | | | | |
| mol/hr | Out | 0.0063 | 0.0061 | 0.0005 | 0.0015 | 0.0005 | 0.0019[a] |

[a] ± 0.0003 mol/hr

EXAMPLE 12

A CuO/ZnO = 30/70 mol% catalyst was coprecipitated from a (Cu/Zn) nitrate solution by 1.0 M sodium carbonate, filtered, washed, dried, calcined to 350°C, and pelletized to 10-20 Mesh. A 2.45 g (4.8 ml) portion of the dry pelletized solid was diluted with an equal volume of Pyrex beads, centered in the 316 stainless steel reactor, and reduced at 250°C and ambient pressure with a $H_2/N_2$ = 2/98 vol% gas mixture. After cooling to ambient temperature, the reaction system was pressurized to 840 psig with hydrogen, and the flow rates of hydrogen and carbon monoxide were adjusted to the desired values with the resultant composition being $H_2/CO$ = 2/1. The reactor was heated to 120°C, and heated ammonia gas was added to the synthesis gas stream at the top of the reactor. The catalyst was then initially tested at the conditions specified in Table XI.

TABLE XI

The Results of the Reaction of Synthesis Gas With Ammonia ($NH_3/CO = 2.1$) over 2.45 g (4.8 ml) of Cu/ZnO = 30/70 Catalyst at 300°C, a Pressure of 840 psig, and with GHSV = 1040 $hr^{-1}$

| | $H_2$ | $CO$ | $CO_2$ | $NH_3$ | $CH_3NH_2$ |
|---|---|---|---|---|---|
| Moles/hr In | 0.0806 | 0.0401 | | 0.0834 | |
| Moles/hr Out | a | 0.0382 | 0.0009 | 0.0826 | 0.0009 |

[a] Not determined.

Under these conditions with $NH_3/CO\ H_2$ = 40.9/19.6/39.5, approximately 4% of carbon monoxide was converted in equal proportions to methylamine and carbon dioxide. No methanol was detected in the exit gas, nor were dimethylamine and trimethylamine formed under these experimental conditions.

Maintaining the temperature at 300°C and the pressure at 840 psig, the flow rate of ammonia was decreased so that the inlet gas stream consisted of $NH_3/CO/H_2$ = 28.2/23.8/47.9. The results of this test are presented in Table I-B. About 7.2% CO conversion was observed and the yield of monomethylamine was 0.31 mol/l of catalyst/hr. This can be regarded as a minimum yield because this catalyst was pelletized to give a low bulk density of 0.51 g/ml instead of the usual 0.82 g/ml. The monomethylamine yield corresponds to 0.50 mol/kg of catalyst/hr. A trace of dimethylamine was present in the exit stream, but no water or methanol was detected.

TABLE XII

The Results of the Reaction of Synthesis Gas With Ammonia ($NH_3/CO = 1.2$) over 2.45 g (4.8 ml) of Cu/ZnO = 30/70 Catalyst at 300°C, a Pressure of 840 psig, and with GHSV = 870 $hr^{-1}$

| | $H_2$ | CO | $CO_2$ | $NH_3$ | $CH_3NH_2$ |
|---|---|---|---|---|---|
| Moles/hr In | 0.0806 | 0.0401 | | 0.0474 | |
| Moles/hr Out | a | 0.0372 | 0.0014 | 0.0459 | 0.0015 |

[a] Not Determined

EXAMPLE 13

A 2.45 g (4.8 ml) portion of the Cu/ZnO = 30/70 catalyst described in Example 1 was prepared for testing using the procedure described in the previous example, but it was tested under different experimental conditions. Using a reactant gas stream consisting of $NH_3/CO/H_2$ = 5.2/31.5/63.3, the results in Table XIII were obtained.

TABLE XIII

The Results of the Reaction of Synthesis Gas With Ammonia ($NH_3/CO$ = 0.16) Over 2.45 g (4.8 ml) of Cu/ZnO = 30/70 Catalyst at 300°C, a Pressure of 840 psig, and with GHSV = 650 $hr^{-1}$

| | $H_2$ | $CO$ | $CO_2$ | $NH_3$ | $H_2O$ | $CH_3OH$ | $CH_3NH_2$ | $(CH_3)_2NH$ | $(CH_3)_3N$ |
|---|---|---|---|---|---|---|---|---|---|
| Moles/hr In | 0.0806 | 0.0401 | | 0.0067 | | | | | |
| Moles/hr Out | a | 0.0150 | 0.0107 | 0.0023 | 0.0027 | 0.0013 | 0.00006 | 0.0008 | .0042 |

[a]Not Determined

It is evident that about 63% of the CO reactant was converted to products that consisted of carbon dioxide, methanol, monomethylamine, dimethylamaine, and trimethylamine. About 66% of the inlet ammonia was converted to methylated products with a 96.8% selectivity to trimethylamine. No higher alkyl amines, e.g. ethylamine, were found in the exit gas. The yield of trimethylamine corresponded to 0.88 mol/l of catalyst/hr. (1.7 mol/kg. of catalyst/hr.).

EXAMPLE 14

A CuO/ZnO = 30/70 catalyst was prepared in the same way as in Example 1, and the calcined powder was pelletized from a thick aqueous slurry. A 2.45 g (3.0 m ) portion of the dry pelletized solid was centered in the reactor and reduced at 250°C with a $H_2/N_2$ = 2/98 vol% gas mixture at ambient pressure. After cooling, the reactor was pressurized to 1100 psig with a $H_2/CO$ = 70/30 vol% synthesis gas. Maintaining a gas flow of GHSV = 5000 $hr^{-1}$, the reactor was heated to 225°C and the isopropylamine was injected continuously into the gas stream as the top of the reactor. The conversion results are given in Table XIV.

TABLE XIV

The results of the Reaction of Synthesis Gas Containing $CO/H_2$ = 30/70 vol% at GHSV = 5000 $hr^{-1}$ and a Pressure of 1100 psig with Isopropylamine Over 2.45 g (3.0 ml) of Cu/ZnO (30/70) Catalyst

| | Temperature | CO | $CO_2$ | $H_2O$ | $CH_3OH$ | Isopropyl amine | Methyl Isopropyl-amine | Dimethyl Isopropyl-amine |
|---|---|---|---|---|---|---|---|---|
| Moles/hr In | 225°C | 0.1840 | | | | 0.0282 | | |
| Moles/hr Out | | 0.1372 | 0.0146 | 0.0009 | 0.0165 | 0.0154 | 0.0101 | 0.0027 |
| Moles/hr In | 190°C | 0.1840 | | | | 0.0423 | | |
| Moles/hr Out | | 0.1699 | 0.0040 | 0.0003 | 0.0056 | 0.0383 | 0.0040 | 0.0000 |

When the reaction was carried out at 225°C with a pumping rate of 40 microliters/min (0.0282 mol/hr) of isopropylamine, about 25% of the CO was converted to products and 45% of the primary amine was converted to secondary and tertiary amines with 79% selectivity for the secondary methylisopropylamine. The selectivity is defined as 100 x (mol fraction of methylisopropylamine)/-(mol fractions of methylisopropylamine plus dimethylisopropylamine). At this temperature, the yield of methylisopropylamaine is 3.37 mol/liter of catalyst/hr. At the temperature of 190°C and with a reactor inlet stream of $(CH_3)_2C(H)NH_2/CO/H_2$ = 6.4/28.1/65.5, about 10% of the amine reactant was converted to methylisopropylamine with 100% selectivity. No disproportionation of the amine reactant was observed at either temperature.

## EXAMPLE 15

A Cu/ZnO - 30/70 catalyst was prepared in the same manner as described in Example 3, and the synthesis gas/isopropylamine reaction was carried out under the conditions given in Table XV.

TABLE XV

The Results of the Reaction of Synthesis Gas Containing $CO/H_2$ = 30/70 vol% at GHSV = 5000 $hr^{-1}$ and a Pressure of 1100 psig and Isopropylamine Over 2.45 g (3.0 ml) of Cu/ZnO (30/70) Catalyst

| | Temperature | CO | $CO_2$ | $H_2O$ | $CH_3OH$ | Isopropyl amine | Methyl Isopropyl amine | Dimethyl Isopropyl amine |
|---|---|---|---|---|---|---|---|---|
| Moles/hr In | 215°C | 0.1840 | | | | 0.0071 | | |
| Moles/hr Out | | 0.1409 | 0.0094 | 0.0006 | 0.0239 | 0.0013 | 0.0029 | 0.0028 |
| Moles/hr In | 180°C | 0.1840 | | | | 0.0071 | | |
| Moles/hr Out | | 0.1756 | 0.0016 | 0.0000 | 0.0053 | 0.0058 | 0.0013 | 0.0000 |
| Moles/hr In | 159°C | 0.1840 | | | | 0.0071 | | |
| Moles/hr Out | | 0.1807 | 0.0007 | 0.0000 | 0.0019 | 0.0066 | 0.0005 | 0.0000 |
| Moles/hr In | 150°C | 0.1840 | | | | 0.0071 | | |
| Moles/hr Out | | 0.1820 | 0.0002 | 0.0001 | 0.0015 | 0.0068 | 0.0003 | 0.0000 |

The results summarized in Table XV show that at 215°C about 82% of the amine was methylated, where half of the amine product was dimethylisopropylamine. At the same time when methylation was occurring, methanol synthesis (but not methane formation) was also observed. It is evident from Table XV that the yield of methylisopropylamine is larger at 215°C than that at 180°C, indicating that higher temperatures favor higher yields of methylated amines.

What is claimed is:

1. An alkali-containing copper/zinc oxide catalyst useful for the production of methanol consisting essentially of a binary system comprising a mixture of copper metal and zinc oxide prepared by:

(a) dissolving soluble salts of copper and zinc in an aqueous solution;

(b) coprecipitating the metal hydroxycarbonates and/or metal hydroxynitrates thereof by addition of a sufficient concentration of an aqueous basic carbonate;

(c) separating the precipitate, drying, and calcining same to form the equivalent metal oxides;

(d) reducing the calcined metal oxides in a hydrogen atmosphere substantially to convert copper oxide to lower valence states of copper;

(e) treating the resulting mixture in an oxygen-free atmosphere with a dilute, aqueous solution of an alkali metal hydroxide or an alkali metal salt; and

(f) evaporating the moisture in an oxygen-free environment to recover a dried alkali/copper/zinc oxide catalytic material.

2. The catalyst of claim 1, wherein copper nitrate and zinc nitrate are the salts used in step (a).

3. The catalyst of claim 1 wherein the alkali metal introduced is cesium.

4. The catalyst of claim 1, wherein the alkali metal introduced is rubidium.

5. The catalyst of claim 1, wherein the alkali metal introduced is potassium.

6. The catalyst of claim 1, wherein said catalyst includes from 2 to 70 mol% copper and from 30 to 98 mol% zinc oxide.

7. The catalyst of claim 1, wherein said catalyst includes from 0.01 to 1.0 mol% of alkali deposited in and on the surfaces of said catalyst.

8. The catalyst of claim 1, wherein step (e) is carried out with a mixture of alkali metal hydroxides or salts consisting of one or more from the group of cesium, rubidium, and potassium, and one or more from the group of lithium, sodium, potassium, rubidium, and cesium.

9. A method of producing methylamines from binary synthesis gas and ammonia at conditions of 150-300°C, 14.7-1500 psig and GHSV of 500-20,000 liters of feed gas/liter of catalyst/hour using the catalysts of claim 1 or claim 2 or claim 3 or claim 4 or claim 5 or claim 6 or claim 7 or claim 8.

10. A method of producing methylamines from binary synthesis gas and amines at conditions of 150-300°C, 14.7-1500 psig and GHSV of 500-20,000 liters of feed gas/liter of catalyst/hour using substituted amines of the general formula $NH_2R$ using the catalysts of claim 1 or claim 2 or claim 3 or claim 4 or claim 5 or claim 6 or claim 7 or claim 8.

11. A selective alkylation process for preparing higher substituted amines by reacting a primary amine with a straight or branched chain alcohol having up to twelve carbon atoms under mild reaction conditions, comprising one to 100 atmospheres and 50 to 250°C, wherein the amine to alcohol reactant ratio, expressed on a molar basis, ranges from approximately 0.5:1 to about 20:1, in the presence of a catalyst system selected from the group consisting of (a) a binary combination of essentially amorphous finely divided metallic copper dispersed in zinc oxide and (b) a de-acidified copper or palladium combination with at least one additional metal oxide compound.

12. The process of Claim 1, wherein said de-acidified copper or palladium is the product of a process wherein said catalyst system is de-acidified by treatment with potassium, rubidium, or cesium.

13. The process of Claim 1, wherein said binary catalyst includes from 2 to about 70 mole percent copper and from 30 to 98 mole percent zinc oxide.

14. The process of Claim 1, wherein said reactant amine to alcohol ratio ranges from 0.8:1 to about 3:1.

15. The process of Claim 1, wherein said palladium catalyst is supported on silica with said palladium comprising from 2 to 8 weight percent of the total catalyst and the silica comprises from 92 to 98 weight percent of the total catalyst.

16. The process of Claim 1, wherein said binary catalyst comprises 30 to 67 mole percent copper and 70 to 33 mole percent zinc oxide.

17. The process of Claim 2, wherein the catalyst treatment process results in a catalyst system with potassium, rubidium, or cesium deposited in the surfaces of said catalyst and said potassium, rubidium, and cesium comprise 0.2-2 weight percent of said total catalyst system.

18. The process of Claim 1, wherein the reaction is carried out in the presence of nitrogen gas.

19. An improved alkylation process for preparing higher substituted amines by reacting a primary or secondary amine with a straight or branched chain alcohol having up to 12 carbon atoms under mild reaction conditions, comprising 1 to 100 atmospheres and 50 to 250°C, wherein the amine to alcohol reaction ratio, expressed on a molar basis, ranges from 0.5:1 to 20:1, in the presence of a catalyst system selected from one of an alkaline, binary, or tertiary alkylation catalyst consisting essentially of metallic copper dispersed in zinc oxide, copper dispersed in zinc oxide and alumina, copper dispersed in zinc oxide and chromium oxide, copper dispersed in zinc oxide and zinc aluminum oxide, or palladium, platinum, or iridium metals supported on an oxidic compound or on a second metallic component.